Europäisches Patentamt

European Patent Office

Office européen des brevets

(11) Publication number: 0 314 940
A1

## (12) EUROPEAN PATENT APPLICATION

(21) Application number: 88116722.5

(22) Date of filing: 08.10.88

(51) Int. Cl.⁴: G01B 21/00 , G01B 11/02

(30) Priority: 14.10.87 IT 2228087

(43) Date of publication of application:
10.05.89 Bulletin 89/19

(84) Designated Contracting States:
AT DE ES FR GB IT

(71) Applicant: POINT UNIVERSAL S.P.A.
Via Isonzo 38
I-20095 Cusano Milanino Milano(IT)

(72) Inventor: Vanzo, Augusto
Viale Monte Santo 5
I-20124 Milan(IT)
Inventor: Sircana, Antonio
Via Sismondi 3
I-20133 Milan(IT)

(74) Representative: Modiano, Guido et al
MODIANO, JOSIF, PISANTY & STAUB
Modiano & Associati Via Meravigli, 16
I-20123 Milan(IT)

(54) Optical rule structure with composable modular elements.

(57) The present invention relates to an optical rule structure with composable modular elements comprising profiled elements (2) which are arrangeable mutually aligned with the interposition of connecting blocks (10). Tension elements (15) are associable in longitudinal recesses (4) defined by the profiled elements (2) and interconnectable with the blocks (10). A seat (30) is defined on the inner bottom of the profiled elements (2) and a continuous band (32) bearing readout notches and extending for the entire length of the aligned profiled elements (2) is removably insertable therein.

Fig.1

EP 0 314 940 A1

# OPTICAL RULE STRUCTURE WITH COMPOSABLE MODULAR ELEMENTS

The present invention relates to an optical rule structure with composable modular elements.

As is known, in many industrial applications it is necessary to have available optical rules of considerable length, even in the order of tens of meters.

Optical rules are substantially constituted by a fixed portion on which reference notches are provided and a moving portion or slider which is connectable to another portion of the apparatus on which the optical rule is applied, which portion supports the reading head for detecting the position.

In the case of optical rules of considerable length, remarkable constructive problems are currently encountered; in fact it is obviously impossible to transport enbloc rules having lengths of ten meters or even more, so that it is currently necessary to resort to arranging a plurality of profiled elements side by side.

Known solutions, besides creating considerable problems in the coupling of the various portions of profiled element, have discontinuities, though minimal, at the coupling regions of the various bars.

This fact is extremely disadvantageous, since contact with the slider or moving part must be extremely precise and close, therefore, even minimal level differences in the connecting regions can cause severe disadvantages during reading

In order to try to obviate these disadvantages, sliders have been adopted which are extremely complicated from a structural point of view and have mutually spaced sliding elements so as to be able to easily pass over the regions of discontinuity. Despite this, the solutions of the current art entail extremely severe problems during installation and are not always capable of completely solving the problem.

The aim proposed by the invention is indeed to eliminate the previously described disadvantages by providing an optical rule structure with composable modular ements which allows to create, within adjacent portions of profiled element which constitute the optical rule, a continuous path in the sliding region of the reading head, thus absolutely eliminating any possibility of jamming or damage.

Within the scope of the above described aim, a particular object of the invention is to provide an optical rule structure which is rapidly and simply assembled, and which, in practice, causes no particular problems in obtaining the perfect alignment of the various portions of profiled element.

Another object of the present invention is to provide an optical rule structure with composable modular elements which, by virtue of its peculiar constructive characteristics, is capable of giving the greatest assurances of reliability and safety in use.

Not least object of the present invention is to provide an optical rule structure which can be easily manufactured from commonly commercially available elements and materials and which is furthermore advantageous from a merely economical point of view.

The above described aim and objects and others which will become apparent hereinafter, are achieved by an optical rule structure with composable modular elements, according to the invention, characterized in that it comprises profiled element portions, arrangeable mutually aligned with the interposition of connecting blocks, and tension elements associable in longitudinal recesses defined by said profiled elements and interconnectable with said blocks, said profiled elements each defining an inner bottom having a seat, said seat having inserted therein a continuous band, said band bearing readout notches and extending substantially throughout the entire length of the aligned portions of said profiled element.

Further characteristics and advantages of the invention will become apparent from the description of a preferred but not exclusive embodiment of an optical rule structure with composable modular elements, illustrated only by way of non-limitative example in the accompanying drawings, wherein:

figure 1 is a schematic exploded perspective view of the optical rule;

figure 2 is a transverse sectional view of the optical rule;

figure 3 is a sectional view of the optical rule, constituted by a plurality of aligned portions of profiled element, taken along the line III-III of figure 2.

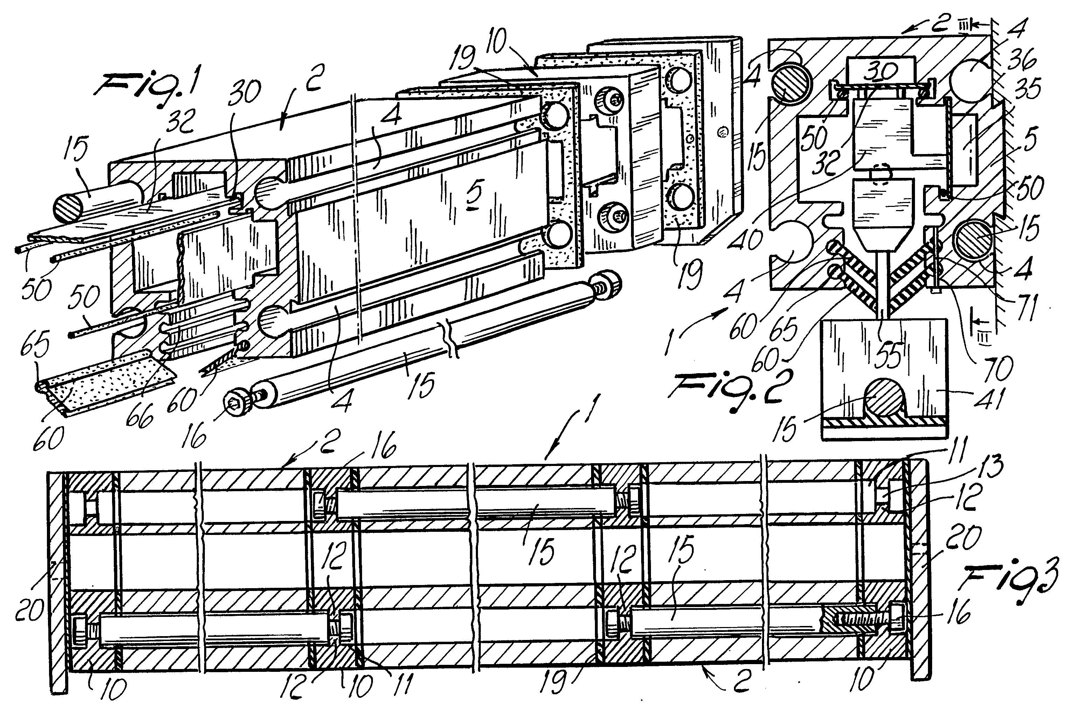

With reference to the above described figures, the optical rule structure with composable modular elements, generally indicated by the reference numeral 1, is constituted by a plurality of profiled elements 2 which can be arranged mutually aligned.

The profiled elements 2 define, in transverse cross section, a substantially U-shaped configuration and have, at the outer edges, longitudinal recesses 4 which are substantially arranged at the ideal corners of a rectangle.

The profiled elements 2 furthermore advantageously have coupling means constituted by an external dovetail 5 which facilitates fixing of the fixed part.

The various profiled elements 2 are arrangeable mutually aligned with the interposition of connecting blocks 10 shaped, in their interior, complementarily to the transverse cross section of the profiled elements 2 and having holes 11 with an intermediate abutment wall 12 with a through hole 13.

Tension elements 15 are accommodated inside the holes 11 and are locked therein by means of screws 16 which couple with the block 10 on the opposite side of the through hole 13.

Advantageously, if a plurality of bars is arranged aligned, the tension elements located between profiled elements which are arranged as continuation of one another, are arranged in diagonally and mutually offset recesses so as to not create mutual interference.

Advantageously, gasket plates 19 are interposed between the connecting blocks 10 and the profiled elements 2 and provide a perfect seal. An end plate 20 is furthermore provided which closes the longitudinal ends of the profiled elements and is fixable to the last connecting block.

The peculiarity of the invention, according to one aspect thereof, resides in the fact that a seat 30 is defined at the inner bottom portion of each profiled element, and a continuous band 32, bearing the reference notches and extending throughout the entire length of the optical rule constituted by the mutually aligned portions of profiled element, is insertable in said seat.

A lateral seat 35 is furthermore provided, and a lateral band 36 which extends throughout the entire length of the optical rule, can be accommodated therein.

The bands 32 and 36 constitute a continuous path, free from the discontinuities typical of the connecting regions, and consequently provide a continuous path for slideably supporting the reading head 40 of the moving element or slider 41 of the optical rule.

This is very important, since the band, which is generally obtained from a strip of flexible metallic material, can be made in any length and transported to the site of application while coiled, and then inserted into the profiled elements once said profiled elements have been arranged in the required length.

The bands thus mounted and kept in position by means of the gaskets generally indicated by the reference numeral 50 obtain a continuous path free from obstructions and therefore allow extreme precision and uniformity when sliding of the moving element.

At the open portion of the U-shaped cross section of the profiled element 2 there are two pairs of gaskets 60 arranged mutually opposite and spaced so as to create a double seal on the stem 55 of the moving element.

The gaskets 60 have an insertion head 65 which has reduced dimensions with respect to the longitudinal recess 66 correspondingly provided in the profiled elements 2, so that the gaskets are easily and rapidly insertable with no danger of jamming inside the recesses. In order to perform the locking of the gaskets 65, once they are positioned, transverse holes 70 are provided which affect said longitudinal recesses, and a locking pin 71 is insertable therein and has the function of keeping the gaskets perfectly in position, which gaskets are locked at spaced positions along the longitudinal extension of said recesses.

From what has been described above it can thus be seen that the invention achieves the proposed aim and objects and in particular the fact is stressed that the adoption of a sliding path for the reading head constituted both by a band bearing the readout notches and extending continuously for the entire length of the profiled elements and by a lateral band which also extends for the entire length allows to obtain an extremely secure support for the reading head, without discontinuities, even if optical rules of considerable length are composed.

Another important aspect of the invention furthermore resides in that a double series of gaskets is adopted to create a seal between the profiled elements and the moving element or slider, so as to absolutely prevent any infiltration of dust or dirt which could damage or in any way bias the performed readouts.

The invention thus conceived is susceptible to numerous modifications and variations, all of which are within the scope of the inventive concept.

Furthermore all the details may be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Optical rule structure with composable modular elements, characterized in that it comprises profiled elements arrangeable mutually aligned with the interposition of connecting blocks, and tension elements associable in longitudinal recesses defined by said profiled elements and interconnectable with said blocks said profiled elements each defining, at an inner portion thereof, at least one seat in which a continuous band is removably accommodatable, said band bearing readout notches and extending substantially for the entire length of the aligned profiled elements.

2. Optical rule structure, according to claim 1, characterized in that it comprises sealing gasket plates interposed between said profiled elements and said blocks.

3. Optical rule structure, according to one or more of the preceding claims, characterized in that said longitudinal recesses are arranged substantially at the corners of an ideal rectangle.

4. Optical rule structure, according to one or more of the preceding claims, characterized in that said blocks have, at positions corresponding to said recesses, holes with an intermediate wall having a through opening for the engagement of a screw for locking said tension elements.

5. Optical rule structure, according to one or more of the preceding claims, characterized in that mutually aligned profiled elements are connected to said blocks by means of pairs of tension elements arranged mutually offset and being located diagonally in said recesses.

6. Optical rule structure, according to one or more of the preceding claims, characterized in that it comprises, inside said profiled elements, a lateral seat for accommodating a continuous lateral band.

7. Optical rule structure, according to one or more of the preceding claims, characterized in that said continuous band and said lateral continuous band provide the sliding path for the reading head of the moving element or slider of said optical rule.

8. Optical rule structure, according to one or more of the preceding claims, characterized in that it comprises, at an open face of said profiled elements, at least two pairs of sealing gaskets arranged mutually offset and spaced apart, said sealing gaskets engaging by contact with a slider stem, said gaskets each having a head insertable in longitudinal recesses defined by said profiled elements, said head having smaller diametral dimensions than said longitudinal recesses, transverse holes being furthermore provided for inserting a pin for locking said gaskets.

9. Optical rule structure, characterized in that it comprises, at its longitudinal ends, plates removably associable with said blocks.

Fig.1

Fig.2

Fig.3

EP 0 314 940 A1

## DOCUMENTS CONSIDERED TO BE RELEVANT

EP 88116722.5

| Category | Citation of document with indication, where appropriate, of relevant passages | Relevant to claim | CLASSIFICATION OF THE APPLICATION (Int. Cl.4) |
|---|---|---|---|
| A | US - A - 4 160 328 (ERNST)  . <br> * Totality * <br> -- | 1,2 | G 01 B 21/00 <br> G 01 B 11/02 |
| A | US - A - 4 170 826 (HOLSTEIN) <br> * Totality * <br> -- | 1,2 | |
| A | US - A - 4 534 113 (HOLSTEIN) <br> * Totality * <br> -- | 1 | |
| A | US - A - 3 579 836 (KRAUS) <br> * Totality * <br> ---- | 8 | |

| | | |
|---|---|---|
| | | **TECHNICAL FIELDS SEARCHED (Int. Cl.4)** |
| | | G 01 B 3/00 <br> G 01 B 5/00 <br> G 01 B 7/00 <br> G 01 B 11/00 . <br> G 01 B 21/00 |

The present search report has been drawn up for all claims

| Place of search | Date of completion of the search | Examiner |
|---|---|---|
| VIENNA | 28-02-1989 | TOMASELLI |

EPO Form 1503 03 82